# EUROPEAN PATENT APPLICATION

(11) **EP 1 340 722 A1**
(43) Date of publication of application: **03.09.2003**
(21) Application number: 03001490.6
(22) Date of filing: 23.01.2003
(51) Int. Cl.: C03B 19/14, C03C 3/06, C03C 4/00

(54) **Synthetic quartz glass material for ArF aligners**

(30) Priority: 31.01.2002 JP 2002024256
(71) Applicant: Heraeus Quarzglas GmbH & Co. KG, 63450 Hanau (DE); Shin-Etsu Quartz Products Co., Ltd., Shinjuku-ku, Tokyo 160-0023 (JP)
(72) Inventor: Fujinoki, Akira, Koriyama-shi, Fukushima 963-0701 (JP); Nishimura, Hiroyuki, Koriyama-shi, Fukushima 963-8851 (JP); Uebbing, Bruno, 63755 Alzenau (DE)
(74) Representative: Kühn, Hans-Christian

(57) **Abstract**

An object of the invention is to provide a synthetic quartz glass material for use in constructing optics for transmitting ArF excimer laser radiations having an energy density per pulse in a range of from 0.001 to 0.5 mJ/cm², particularly suitable for use in constructing lenses, prisms, windows, and the like for semiconductor wafer aligners, which yields small change in birefringence in case laser is irradiated.

The objects above have been accomplished by a synthetic quartz glass material for use in the optics of an ArF aligner transmitting ArF excimer laser radiations having an OH group concentration of 5 ppm or higher but not higher than 300 ppm, and a hydrogen molecule concentration of 1 × 10¹⁶ molecules/cm³ or higher but lower than 2 × 10¹⁷ moleculues/cm³, which yields an energy density per pulse in a range of from 0.001 to 0.5 mJ/cm², having a uniformity in refraction index Δn of 1 × 10⁻⁶ or lower, a birefringence of 1 nm/cm or lower, and an internal transmittance for ultraviolet radiation 193.4 nm in wavelength of 99.7 % or higher.

## Description

The present invention relates to a synthetic quartz glass material for use in constructing optics for transmitting ArF excimer laser radiations having an energy density per pulse in a range of from 0.001 to 0.5 mJ/cm² (which may be simply referred to as mJ/cm² p), particularly suitable for use in constructing lenses, prisms, windows, and the like for semiconductor wafer aligners, which yields small change in birefringence in case laser is irradiated.

As finer patterns are being made with increasing degree of integration of ULSIs these days, aligners with exposure light sources having still shorter wavelength are demanded for patterning circuit patterns on a semi. wafer. As a result, a KrF excimer laser (having a wavelength of 248 nm) is mainly used in thee place of a conventional I line (with wavelength of 365 nm), and more recently, practical use of ArF excimer laser (having a wavelength of 193 nm) is under way.

Thus, with decreasing wavelength of the light sources above, higher precision is required for the optical components used in aligners, such as lenses, windows, prisms, and the like.

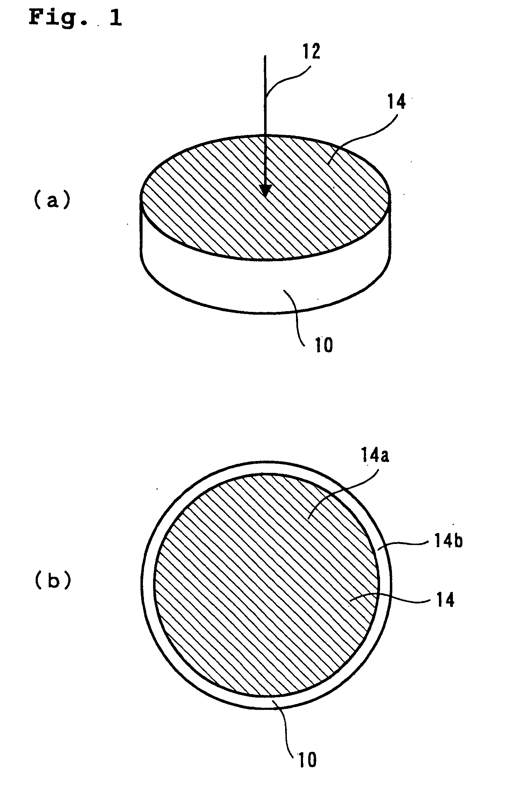

For the ArF excimer lasers in particular, not few extremely important quality requirements exist concerning high homogeneity in refractive index, low birefringence, high transmittance for excimer lasers, high stability against irradiation of excimer lasers, and the like. More specifically, the optical properties required on such optical components is extremely high, such that the homogeneity in refractive index should be 1 × 10⁻⁶ or lower as Δn, that the birefringence should be 2 nm/cm or lower, and that the internal transmittance for an ultraviolet radiation of 193.4 nm in wavelength should be 99.7 % or higher.
Furthermore, referring to Figs. 1(a) and 1(b), concerning the synthetic quartz glass raw material for use in the production of such optical components above, for instance, in case of a disk-like quartz glass material for producing a lens, the plane functioning as a lens for transmitting light (in general, the direction corresponding to that of transmitting light is denoted as direction of usage 12, and the plane through which the light is transmitted is denoted as plane of usage 14) should be a region (assurance plane 14a) accounting for 90 % of the total area exclusive of the outermost periphery. That is, 10 % of the area corresponding to the outermost peripheral portion (excluded plane 10b) is excluded. More specifically, the assurance plane 14a accounts for 90 % of the area of the plane of usage14. The requirements concerning the homogeneity in refractive index Δn and the birefringence as set forth in the present specification are provided for the assurance plane 14a.

The point to be stressed here is that the optical properties above should be stable for a long period of time under the irradiation of an ArF excimer laser. In order to reduce exposure cost, the state-of-the-art aligners are equipped with ArF excimer lasers emitting at higher frequencies for use as the exposure light source. Since excimer lasers emitting at such a high frequency as 2 kHz are now being developed, extremely severe requirements are set to the optical members used in the aligners, such that the optical properties remain unchanged even after such a large amount of laser pulse irradiations as 2 to 5 × 10¹¹ shots or more are irradiated thereto.

A number of studies have been made to present concerning the change of optical properties of quartz glass under irradiation of ArF excimer laser radiation, and numerous detailed reports related to the behavior of characteristics change have been made to present. However, particularly important characteristic change is the decrease in ultraviolet radiation transmittance due to the generation of paramagnetic defects, and an increase in refractive index with a generation of birefringence ascribed to the so-called laser compaction, which is a volume change occurring on quartz glass.

The generation of paramagnetic defects that occurs on the irradiation of an excimer laser is a phenomenon, for instance, in case such a high energy as ultraviolet radiation of ArF excimer laser is irradiated at a wavelength of 193.4 nm for a long period of time, there generates a paramagnetic defect denoted as E* center due to the destruction of quartz glass bonds. Since E* center has an absorption center at a wavelength of 215 nm, the transmittance of ultraviolet radiations in this particular wavelength region decreases.

In case a drop in transmittance for ultraviolet radiations as such described above occurs on the optical components, a part of the energy of an excimer laser which originally have passed is absorbed by the optical components. Since the absorbed energy is transformed into heat, the absorbed portion is heated to generate a change in refractive index, thereby making exposure of high precision unfeasible. Thus, in view of the reasons above, concerning synthetic quartz glass materials for forming optical components for use in excimer laser aligners, there is required a material which, even under irradiation of excimer lasers for a long duration of time, is less apt to generate paramagnetic defects such as the E* centers and the like.

Furthermore, laser compaction is a phenomenon in which quartz glass undergoes densification with the irradiation of an excimer laser radiation. The term "densification of quartz glass" exactly describes the phenomena; the density of the quartz glass increases at the portion through which the laser is transmitted, and at that portion, the network structure of the quartz glass is cleaved and rearranged to develop a denser structure.

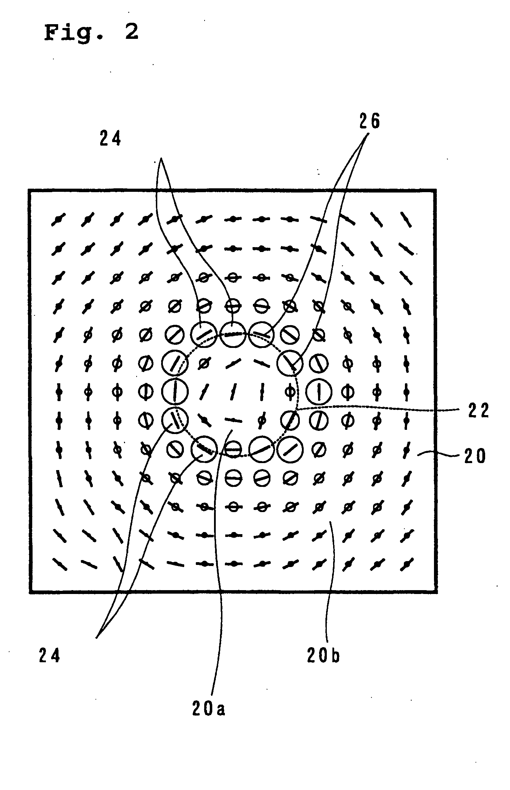

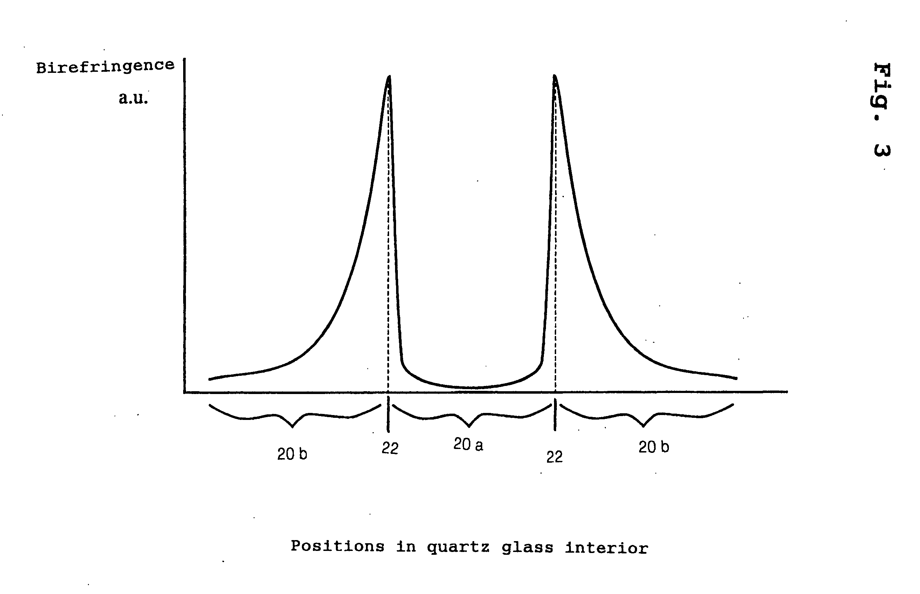

The refractive index of the quartz glass increases with the densification of quartz glass described above. Furthermore, in the laser compaction referring to Figs. 2 and 3, since densification only occurs on the laser irradiated part 20a, stress generates at the boundary 22 between the laser non-irradiated part 20b and the irradiated part 20a. This is observed as the birefringence (with amount of birefringence of 24), and as shown in Fig. 2, the direction of birefringence (axial direction 26) of the quartz glass 20 appears in a relatively random manner. As described above, laser compaction leads to a double change in optical properties, namely, changes in refractive index and birefringence. Hence, for a synthetic quartz glass material used in optical components assembled in an excimer laser aligner, it has been well accepted that laser compaction is a change in optical properties that should be avoided over the generation of paramagnetic defects.

In fact, the generation of paramagnetic defects and laser compaction described above are believed to originate from the same one cause. More specifically, the Si-O-Si bond which forms the quartz glass structure absorbs the ArF excimer laser radiation in a special mechanism of two-photon absorption, and is cleaved by the absorbed energy.

Nearly all of the cleaved Si-O-Si bonds almost instantaneously undergoes rebonding while discharging energy, and at this instance, the bond is rearranged in a direction of increased density. This is what happens in laser compaction. On the other hand, for instance, in case the electron presenting in the cleaved Si-O orbital is ejected with the cleavage, re-bonding into Si-O-Si becomes unfeasible. In such a case, the electron in the Si orbital may reside to form the E* center, i.e., the paramagnetic defect.

According to this model, laser compaction may be regarded to consist of far more number of reactions as compared with the case of generating a paramagnetic defect. However, in fact, the calculation shows that the number of molecules taking part in the laser compaction is greater by nearly two digits as compared with the number of E* centers. Hence, in order to improve the excimer laser characteristics of quartz glass, it has been believed most important to overcome the problem of laser compaction.

In order to prevent laser compaction and paramagnetic defects from occurring, and to considerably improve the stability of synthetic quartz glass material against the excimer laser irradiation, widely accepted is to control the hydrogen molecule concentration contained in the synthetic quartz glass up to a certain level. For instance, in Japanese Patent Laid-Open No. 088742/1991, there is disclosed a technique comprising maintaining the hydrogen molecule concentration of the synthetic quartz glass to 5 × 10¹⁶ molecules/cm³ or higher to form an optical member suitable for use in an aligner mainly equipped with a KrF excimer laser as the light source.

Furthermore, Japanese Patent Laid-Open No. 292551/1999 or Japanese Patent Laid-Open No. 2000-258601 discloses a technique for forming an optical member suitable for use in an aligner mainly equipped with an ArF excimer laser as the light source, comprising maintaining the hydrogen molecule concentration of the synthetic quartz glass to 2 × 10¹⁷ molecules/cm³ or higher. The hydrogen molecule concentration required in the technique disclosed in Japanese Patent Laid-Open No. 2000-258601 is 4 times as high as that required in the disclosure of Japanese Patent Laid-Open No. 88742/1991 because, an ArF excimer laser radiation (193 nm in wavelength) has a greater damage on quartz glass, since is shorter in wavelength as compared with a KrF excimer laser radiation (248 nm in wavelength). Hence, to assure sufficiently high durability against the radiation, a higher hydrogen molecule concentration is required.

As described above, it has been believed to achieve a certain stability in optical characteristics against excimer laser irradiation, particularly ArF excimer laser irradiation, by controlling the hydrogen molecule concentration in the quartz glass to a proper level. For instance, according to the evaluation report for quartz glass materials on 1999 with respect to the durability against laser radiation, life expectation of an optical member in practical use under a low energy density of 0.1 mJ/cm² per pulse has been provided based on the results obtained by irradiation tests performed with 4 × 10⁹ shots at an energy density per pulse of 0.6 mJ/cm². As a result, there is developed a quartz glass material having a durability of 10 years or longer for both of laser compaction and transmittance (Optical Microlithography XII Proceedings of SPIE, vol. 3679 (1999) pp.1137-1145).

However, the irradiation tests above are tests for the evaluation of stability of a quartz glass that are made in a short period of time, and are accelerated tests using laser radiations several times as high in energy density as that irradiated to an optical component practically assembled in an ArF excimer laser aligner.

In the light of such circumstances, synthetic quartz glass was subjected to an irradiation having an energy density well comparable to that transmitting through the optical members in practical aligner, and the change in characteristics was investigated. As a result, it has been observed that, contrary to the results obtained in tests under irradiation of high energy density tests, a phenomenon of causing drop in refractive index occurred on the quartz glass (Optical Microlithography XIII Proceedings of SPIE vol. 4000 (2000) pp. 496-510).

In further detail, according to this phenomenon, the refractive index was found to drop on irradiated parts of several types of synthetic quartz glasses, in case ArF excimer laser radiation was irradiated for 1 ×10¹⁰ pulses or more at an energy density (0.01 mJ/cm² p to 0.5 mJ/cm² p) well comparable to that actually employed in practical aligners. What is characteristic in this case is that, in addition to the drop in refractive index, an extremely strong birefringence is observed over the entire area of the irradiated part. The intensity is about 5 nm/cm at the maximum, and was found more undesirable than the change in refractive index when used as a synthetic quartz glass material of an optical member. In contrast to laser compaction, this phenomenon comprising decreased refractive index and causing large birefringence in case of prolonged irradiation of a low energy density excimer laser radiation is known as laser rarefaction, and is an important problem concerning the optical stability of an ArF aligner.

The present inventors have conducted several experiments mainly on the physical properties of synthetic quartz glass concerning laser rarefaction phenomenon, and considerably interesting results phenomena have been found. More specifically, it has been found that a quartz glass yielding higher resistance against laser compaction in the accelerated tests performed to present show greater drop in refractive index. That is, concerning change in refractive index, it has been found that laser rarefaction characteristics of synthetic quartz glasses are contradictory to the laser compaction characteristics. On the other hand, concerning the intensity of the birefringence which accompanies the laser rarefaction, it has been found that quite large value of birefringence generates equally on all of the raw materials independent to the amount of change in refractive index caused by laser rarefaction.

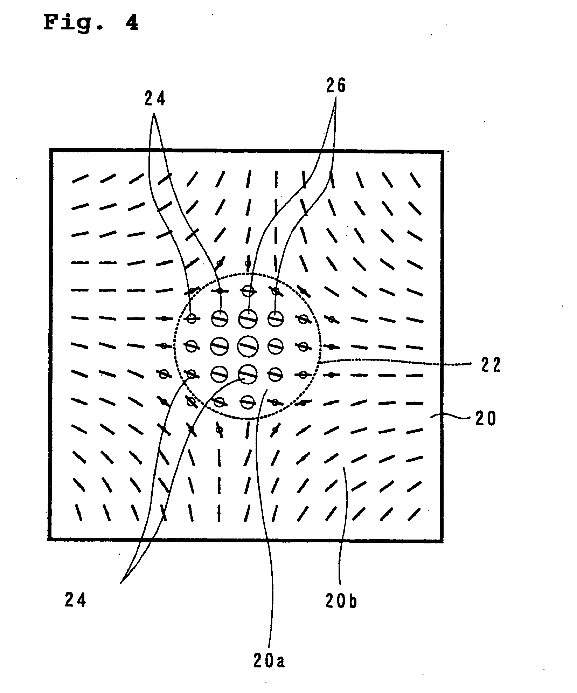

Furthermore, it has been found that the birefringence attributed to laser rarefaction is characterized by that the direction of birefringence (for example, the direction of retardation phase) is in parallel to the direction of the polarized light of the laser, as shown in Fig.4.

In case of an ArF aligner strictly requiring patterning with high precision, the effect of the birefringence ascribed to the optical components is extremely important. Although depending on the distribution pattern of the birefringence within the optical system, the optical path length of a projection optical system of an aligner used in general is about 100 cm; for instance, if we suppose the birefringence for each of the optical components constituting the optical path length is about 1 nm/cm, and suppose the directions thereof are in parallel with each other, the retardation (the optical path difference between the advanced phase axis and the retarded phase axis) for the entire optical system amounts to a value as large as 100 nm. Hence, it is therefore unfeasible to achieve the desired exposure.

However, in case of a synthetic quartz glass for optical use, in general, the direction of birefringence appears relatively randomly, and the birefringence is small at the central portion of the lens. Hence, by combining a plurality of lenses in such a manner that the directions of birefringence thereof cancel out with each other, the influence thereof can be reduced. In such a manner, even though each of the optical members should have a birefringence of about 1 nm/cm, the entire system results feasible, since total birefringence at the image-forming position can be controlled to 2nm/cm or less in such a manner described in, for instance, patent No. 3089955.

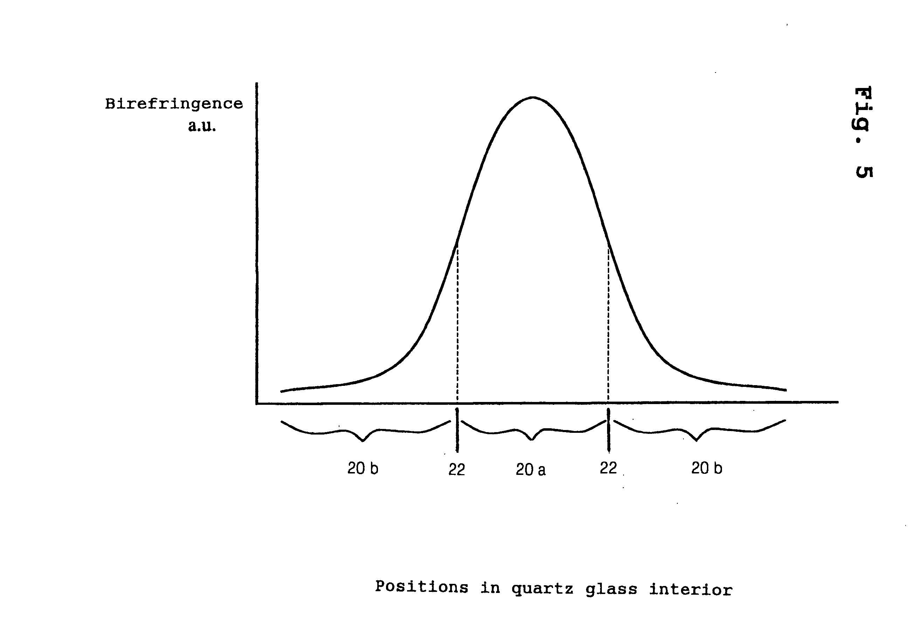

However, in case of the birefringence occurring on the quartz glass due to laser rarefaction, as is shown in Fig. 4, the direction of birefringence (axial direction 26) in the quartz glass 20 results in parallel, and, as shown in Figs. 4 and 5, the intensity distribution is as such that a maximum value is attained at the central part (corresponding to the central part of the lens in case of a practical lens) of the laser-irradiated portion 20a. Hence, it has been found that, for instance, even in case the birefringence is a value as small as about 0.5 nm, there generates problems such as a drop in contrast at the exposure and the like as to considerably impair the exposure characteristics and the like. Referring to Fig. 4, 20b shows the part remaining non-irradiated by laser, 22 is the boundary, and 24 is the amount of birefringence.

In the light of the problems above, the present inventors have intensively conducted studies; as a result, it has been found that, in case of a synthetic quartz glass material for use in constructing optics for transmitting ArF excimer laser radiations having low energy density per pulse in a range of from 0.001 to 0.5 mJ/cm², an optics having exposure characteristics that is stable for a long period of time is feasible by selecting a synthetic quartz glass which is free from causing laser rarefaction which induces large birefringence, and which generates minute laser compaction as such hardly affecting the laser characteristics.

The present invention provides a synthetic quartz glass material for use in constructing optics for transmitting ArF excimer laser radiations having an energy density per pulse in a range of from 0.001 to 0.5 mJ/cm², particularly suitable for use in constructing lenses, prisms, windows, and the like for semiconductor wafer aligners, which yields small change in birefringence in case laser is irradiated thereto.

In order to solve the problems above, a synthetic quartz glass material for ArF aligners according to the present invention is characterized by that it is a synthetic quartz glass material for use in the optics of an ArF aligner transmitting ArF excimer laser radiations at an energy density per pulse in a range of from 0.001 to 0.5 mJ/cm², having a uniformity in refractive index Δn of 1 × 10⁻⁶ or lower, a birefringence of 1 nm/cm or lower, and an internal transmittance for ultraviolet radiation 193.4 nm in wavelength of 99.7 % or higher, with an OH group concentration of 5 ppm or higher but not higher than 300 ppm, and a hydrogen molecule concentration of 1 × 10¹⁶ molecules/cm³ or higher but lower than 2 × 10¹⁷ molecules/cm³.

In case 1 × 10⁹ shots of ArF excimer laser radiation are shot at an energy per pulse of 0.1 mJ/cm² to the synthetic quartz glass material for ArF aligners above, there occurs a change in refractive index as such to increase the index.

The change in the refractive index preferably has a fluctuation within a range as expressed by Δn/n in a range of 0.01 × 10⁻⁶ or higher but not higher than 0.7 × 10⁻⁶.

In the synthetic quartz glass material for ArF aligners above, in case ArF excimer laser radiation is shot for 1 × 10⁹ shots at an energy density of 0.1 mJ/cm² per pulse, preferably, there generates a distribution in birefringence as such that yields a maximum value along the boundary plane between the radiated part and the non-radiated part with a maximum value of 1.0 nm/cm or lower and a change in birefringence at the center of the irradiated part of 0.5 nm/cm or lower.

Concerning the synthetic quartz glass material for ArF aligners above, in case ArF excimer laser radiation is shot for 5 × 10⁶ shots at an energy density of 20 mJ/cm² per pulse, the change in refractory index occurs as such to increase the refractory index and to yield a change in width of the refractory index as expressed by δn/n in a range of 0.01 × 10⁻⁶ or higher but not higher than 0.7 × 10⁻⁶.

In the synthetic quartz glass material for ArF aligners above, in case ArF excimer laser radiation is shot for 5 × 10⁶ shots at an energy density of 20 mJ/cm² per pulse, there generates a distribution in birefringence as such that yields a maximum value along the boundary plane between the radiated part and the non-radiated part with a maximum value of 1.0 nm/cm or lower and a change in birefringence at the center of the irradiated part of 0.5 nm/cm or lower.

In the synthetic quartz glass material for ArF aligners above, in case ArF excimer laser radiation is shot for 5 × 10⁶ shots at an energy density of 20 mJ/cm² per pulse, the drop in transmittance for an ultraviolet radiation of 193.4 nm in wavelength is within 0.4 %.

The mode of practicing the present invention is explained with reference to attached drawings, however, the description below is shown merely as examples, and it should be understood that various modifications can be made thereto so long as they do not deviate from the technical idea of the present invention.

According to the knowledge to present, it was required that laser compaction in synthetic quartz glass should be minimized as possible, because it elevated the refractive index and increased birefringence. However, concerning the newly discovered relation between laser compaction and laser rarefaction, it was understood that laser compaction is rather a necessary characteristic for preventing rarefaction from occurring, so long as it falls within the allowable limit of an aligner.

Accordingly, on studying the physical properties of a synthetic quartz glass material free from laser rarefaction while generating laser compaction in an allowable range due to long exposure, it has been found that a synthetic quartz glass material characterized by yielding a uniformity in refraction index Δn of 1 × 10⁻⁶ or lower, a birefringence of 1 nm/cm or lower, and an internal transmittance for ultraviolet radiation 193.4 nm in wavelength of 99.7 % or higher, and by having a hydrogen molecule concentration of 1 × 10¹⁶ molecules/cm³ or higher but lower than 2 × 10¹⁷ molecules/cm³, is favorable for use in an ArF aligner.

The findings above differ from those known in the art, since, when the synthetic quartz glass material has a hydrogen molecule concentration of 2 × 10¹⁷ molecules/cm³ or higher, in case an energy density per pulse of ArF excimer laser is over 0.5 mJ/cm², it certainly shows extremely superior laser resistant characteristics such as laser compaction and suppression of the generation of E* centers and the like, but there occurs laser rarefaction in case ArF excimer laser is irradiated for such a long duration of time as 1 × 10⁹ shots or more at an energy density per pulse of 0.5 mJ/cm² or lower, and this was found problematic because it caused a drop in refractive index and a large birefringence.

On the other hand, in case the synthetic quartz glass material has a hydrogen molecule concentration lower than 1 × 10¹⁶ molecules/cm³, it also was found problematic because laser compaction and the generation of E* centers led to a large drop in transmittance exceeding the allowable range.

Based on the above findings, the preferred hydrogen molecule concentration was found to be in a range of 1 × 10¹⁶ molecules/cm³ or higher but lower than 2 × 10¹⁷ molecules/cm³, and more preferably, in a range of 5 × 10¹⁶ molecules/cm³ or higher but lower than 1 × 10¹⁷ molecules/cm³.

By employing the above constitution, there can be obtained a synthetic quartz glass material according to the present invention in which, in case ArF excimer laser radiation is shot for 1 × 10⁹ shots at an energy density of 0.1 mJ/cm² per pulse, the change in refractory index occurs as such to increase the refractory index, wherein the change in width of the refractory index as expressed by δn/n is in a range of 0.01 × 10⁻⁶ or higher but not higher than 0.7 x 10⁻⁶; and, in case ArF excimer laser is irradiated to the synthetic quartz glass material under the same conditions as above, there generates a distribution in birefringence falling within the allowable range as shown in Fig. 2 and Fig. 3, such that the distribution yields a maximum value along the boundary plane 22 between the laser-irradiated part 20a and the non-irradiated part 20b with a maximum value of 1.0 nm/cm or lower and a change in birefringence at the center of the laser-irradiated part 20a of 0.5 nm/cm or lower.

On the other hand, in order to suppress the paramagnetic defects such as the E* centers and the like by using a synthetic quartz glass material having relatively low hydrogen molecule concentration as above, it has been found important to control the concentration of the OH groups contained in quartz glass to fall in a proper range. More specifically, should the hydrogen molecule concentration be equal, a higher OH group concentration facilitated the generation of E* centers. Accordingly, the OH group concentration is preferably in a range of 5 ppm or higher but not higher than 300 ppm, and more preferably, not higher than 200 ppm. To the contrary, it has been found that, in case the OH group concentration should be lower than 5 ppm, oxygen deficient defects tend to be generated in the quartz glass, and this led to the generation of E* centers immediately after the initiation of laser irradiation, which easily caused a drop in transmittance.

Furthermore, chlorine contained in quartz glass may reduce the transmittance of the radiations in the shorter wavelength region. Accordingly, the content thereof is preferably as small as possible, and preferably, the quartz glass contains 20 ppm or less chlorine, or made free of chlorine, if possible, by using raw materials and the like free of chlorine. However, concerning fluorine, an addition thereof in a trace quantity not only increases the transmittance in the far ultraviolet region of the quartz glass, but also improves durability against excimer lasers such as of ArF, in particular, by suppressing the appearance of E* centers. Hence, a presence of fluorine in small quantities is preferred. However, in case of fluorine also, the presence thereof in large quantities degrades the stability in refractive index of the quartz glass; thus, the concentration thereof is suppressed to 1000 ppm or lower at maximum, and preferably, to 300 ppm or lower.

In order to stabilize the refractive index and to lower Δn, the fictive temperature should be 1000°C or lower, and preferably, in a range of from 850 to 980°C.

On the other hand, quartz glass containing hydrogen sometimes contain SiH groups as reductive defects for quartz glass, and in case the concentration thereof is too high, SiH groups easily disintegrate to form E* centers upon irradiation of laser radiation. Accordingly, their concentration is preferably set as low as possible. It is difficult to express the concentration of SiH groups quantitatively with values because there is no standard specimen; however, by performing Raman spectroscopy measurements, there can be obtained scattering intensities at a wavenumber of 2250 cm⁻¹ and 800 cm⁻¹, and if the scattering intensity ratio is below the detection limit (i.e., 1 × 10⁻⁴ or lower), it can be said to have no problem at all.

Furthermore, in the accelerated test to determine the durability of the glass material, the conditions for evaluation were found to be such to investigate the change in optical properties on irradiating Arf excimer laser for 5 × 10⁶ shots at an energy density of 20 mJ/cm² per pulse or lower. By using these conditions in practical use, there could be successfully determined quartz glass free from laser rarefaction in case it was subjected to a long-term irradiation of laser radiation, whose change in refractive index and the generation of birefringence due to laser compaction were within the allowable range, and whose drop of transmittance attributed to E* centers also fell in an allowable range.

That is, by employing the characteristic constitution according to the present invention as described above, the change in refractive index in case ArF excimer laser radiation is irradiated to the synthetic quarts glass material according to the present invention for 5 × 10⁶ shots at an energy density of 20 mJ/cm² per pulse can be controlled as such to increase the refractive index, and the width of change as expressed by δn/n can be set in a range of 0.01 × 10⁻⁶ or higher but not higher than 0.7 × 10⁻⁶. Furthermore, in case ArF excimer laser is irradiated to the synthetic quartz glass material under the same conditions as above, there can be obtained a distribution in birefringence falling within the allowable range as shown in Fig. 2 and Fig. 3, such that the distribution yields a maximum value along the boundary plane 22 between the laser-irradiated part 20a and the non-irradiated part 20b with a maximum value of 1.0 nm/cm or lower and a change in birefringence at the center of the laser-irradiated part 20a of 0.5 nm/cm or lower. Moreover, in case ArF excimer laser is irradiated to the synthetic quartz glass material under the same conditions as above, the drop in transmittance for an ultraviolet radiation of 193.4 nm in wavelength can be controlled within 0.4 %.

The present invention is described in further detail by making reference to specific examples below, however, it should be understood that these examples are provided merely as examples, and that they are by no means limiting the present invention.
In the Examples, Comparative Examples, and Experimental Examples below, measurements on transmittance, birefringence, fictive temperature, OH group concentration, and hydrogen concentration were made by the measurement methods below.

Concentration of OH groups: Measurements were made by infrared spectroscopy (in further detail, absorption coefficient was obtained for a wavenumber of 4522 cm⁻¹ by using Fourier-transform infrared spectroscopy; where conversion was made according to the following equation: OH group concentration (ppm) = (absorption coefficient at 4522 cm⁻¹) × 4400).

Transmittance: Measurements were performed by ultraviolet spectroscopy.

Quantity of birefringence: Measurements were made by using a birefringence measurement system (for instance, EXICOR 350AT).

Fictive temperature: Measurements were performed in accordance with laser Raman spectroscopy (more specifically, measurements were made according to the method described in The Journal of American Physical Society, Vol. 28, No.6, pp. 3266-3271, September 1983).

Concentration of hydrogen molecules: Measurements were made by laser Raman Spectroscopy (more specifically, measurements were made according to the method described in Zhurnal Priklandnoi Spektroskopii, Vol. 46, No. 6, pp.987-991, 1987. In case of detecting the concentration of hydrogen molecules in such a low level of 5 x 10¹⁵ molecules/cm³, the scattering intensity becomes so weak that a powerful laser having a power in the level of 10 W at minimum is necessary as the excitation Ar ion laser).

Striae: Measurements were made in accordance with US Military standards (MIL-G-174B standard) by using schlieren apparatus manufactured by Mizojiri Optical Co., Ltd.

### Example 1

Silicon tetrachloride was subjected to flame hydrolysis in an oxy-hydrogen flame to form fine soot-like silica, which was deposited on a rotating base to obtain soot-like silica agglomerate (which is referred to hereinafter as "soot body").

The soot body thus obtained was subjected to vitrification by heating at 1500°C for 10 hours in a mixed gas atmosphere containing 50 % by volume hydrogen, 3 % by volume water vapor, and balance He to obtain a transparent body. The synthetic quartz glass was found to have OH group concentration of 150 ppm, chlorine concentration of 9 ppm, and hydrogen molecule concentration of 5 × 10¹⁷ molecules/cm³, respectively.

The synthetic quartz glass body thus obtained was subjected to homogenization treatment in three directions by means of zone melting method disclosed in Japanese Patent Laid-Open No. 267662/1995, and was then set inside a high purity graphite mold to shape it into a disk 280 mm in diameter and 100 mm in thickness by using an electric furnace.

The shaped body above was subjected to grinding removal for 10 mm at the parts in contact with the graphite mold in order to prevent diffusion of metallic pollutants from occurring, was set inside a synthetic quartz glass vessel, and after maintaining the resulting shaped body at 1150°C for 40 hours inside the furnace, gradual cooling was performed thereto to 920°C at a cooling rate of 2°C/hour. The electric current applied to the furnace was cut off at that point, such that the resulting product could be subjected to natural cooling.

The homogeneity in refractive index of the synthetic quartz disk (260 mm in diameter and 80 mm in thickness) along the direction of usage was measured by an interference meter (Zygo Mark GPI), and the distribution in birefringence in the same direction was measured by using a birefringence measurement meter. As a result, the homogeneity in refractive index, Δn, in an area accounting for 80 % of the diameter was found to be 1 × 10⁻⁶, the quantity of birefringence was found to be 0.5 nm/cm at maximum, the maximum value in the distribution in birefringence was obtained at the outer periphery, and in the direction of birefringence, the retarded phase axis was in parallel with the peripheral direction. The homogeneity in refractive index in the direction of usage of the quartz glass disk as referred herein signifies, as shown in Fig. 1, the difference between the maximum value and the minimum value of the refractive indices that is obtained with a light transmitting along the thickness direction of the disk. The same holds for birefringence.

From the thus obtained synthetic quartz glass bodies, a specimen (sample A) 60 mm in diameter and 10 mm³ in volume was cut out for measuring transmittance; a specimen (sample B) 10 × 10 × 50 mm³ in size was cut out for measuring hydrogen molecule concentration, SiH group concentration, and the fictive temperature; a specimen (sample C) 60 mm in diameter and 20 mm³ in volume was cut out for measuring the durability against laser radiation of high energy density; and a specimen (sample D) 30 × 30 × 80 mm³ in size was cut out for irradiating thereto a laser radiation of low energy density. High precision mirror polishing was applied to the specimens above, and various characteristics were measured. The measured results are shown in Table 1, summarized by the evaluated items and the method of evaluation.

**Table 1**

| Physical properties of synthetic quartz glass obtained in Example 1 | | | |
|---|---|---|---|
| Evaluated item | Sample | Evaluation method | Evaluation results |
| Internal transmittance for 193.4 nm | A | Ultraviolet spectroscopy | 99.75 % |
| Hydrogen molecule concentration | B | Laser Raman Spectroscopy | 8 × 10¹⁶ molecules/cm³ |
| SiH group concentration | B | Laser Raman Spectroscopy | 1 × 10⁻⁴ or less(*1) |
| Fictive temperature | B | Laser Raman Spectroscopy | 920°C |
| Striae | C | MIL-G-174B | Class A |
| Birefringence | Whole shaped body (*2) | Measurement using Birefringence measurement system | Max 0.5 nm/cm |
| Δn in the direction of use | Whole shaped body (*3) | Measurement using interference meter | Δn: 1 × 10⁻⁶ |

| | | | |
|---|---|---|---|
| In Table 1, notes given by (*) signify the follows: (*1) Concentration of SiH groups given by the ratio of the scattering intensity obtained at wavenumber 2250 cm⁻¹ to that at 800 cm⁻¹. | | | |
| (*2) and (*3) Measurement area corresponds to 90% of the used plane except the outermost periphery (guaranteed plane) | | | |

Since little change was found to occur on OH group concentration and chlorine concentration, no measurements were made thereon.

As shown in Table 1, the synthetic quartz glass body prepared in Example 1 satisfies the constituents of indispensable of the synthetic quartz glass material according to the present invention. More specifically, it satisfies the condition of homogeneity in refractive index, Δn, of 1 × 10⁻⁶ or lower; a birefringence of 1 nm/cm or less; an internal transmittance of 99.7 % or higher for an ultraviolet radiation 193.4 nm in wavelength, an OH group concentration in a range of 5 ppm or higher but not higher than 300 ppm, and a hydrogen molecule concentration in a range of 1 × 10¹⁶ molecules/cm³ or higher but less than 2 × 10¹⁷ molecules/cm³. Striae was found to be in A class, i.e., in a striae-free state.

Then, laser irradiation test was performed on the cut out sample C at high energy density. By using an ArF excimer laser manufactured by Lambda Physics, Inc., laser beam 3 mm in diameter and having an energy density per pulse of 20 mJ/cm² was irradiated to the sample for 5 × 10⁶ pulses at a frequency of 200 Hz.

The transmittance of the sample for a light 193.4 nm in wavelength before and after laser irradiation was measured with an ultraviolet spectroscopy, and the difference between the transmittance before irradiation and that after irradiating laser radiation for 5 × 10⁶ pulses was expressed as the change in laser transmittance. After irradiating laser to the sample, the distribution in refractive index of the sample was measured by using an interference meter, and, from the difference in refractive indices of the laser irradiated part and the non-irradiated part, the change in refractive index generated by the irradiation was obtained as Δn/n. Furthermore, the birefringence for the periphery of the irradiated part was obtained by using the birefringence measurement system. The measured results are given in Table 2.

**Table 2**

| Results of laser irradiation test at high energy density (20 mJ/cm²p) for Example 1 | | |
|---|---|---|
| Evaluated item | Result | Note |
| Change in transmittance | 0.1 % | (*1) |
| Change in refractive index | 0.2 × 10⁻⁶ increase in refractive index | Laser compaction |
| Change in birefringence | 0.5 nm/cm | Maximum value of induced birefringence |
| Distribution of birefringence | Maximum value given along the boundary plane | See Fig. 3(*2) |
| Birefringence at central part | 0.2 nm/cm | Birefringence at the center of irradiated part |

| | | |
|---|---|---|
| In Table 2, notes shown by (*) represent the follows: (*1) Change in transmittance: represents the difference in transmittance for light 193.4 nm in wavelength per 10 mm of sample before and after irradiation. | | |
| (*2) Boundary in the distribution of birefringence: It signifies that the maximum value of the part yielding the maximum value in birefringence is present along the boundary between the laser irradiated part and the non-irradiated part of the sample. | | |

From Table 2, in the high energy density laser irradiation test on the synthetic quartz glass body of Example 1, it can be clearly understood that no laser rarefaction occurred, that the generation of change in refractive index and birefringence attributed to laser compaction fall in an allowable range, and that the drop in transmittance due to E* centers are all in the allowable range.

Subsequently, low energy density laser irradiation test was performed on the cut out sample D. By using an ArF excimer laser manufactured by Lambda Physics, Inc., laser beam 8 mm in diameter and having an energy density per pulse of 0.1 mJ/cm² was irradiated to the sample for 1 × 10⁹ pulses at a frequency of 2 KHz.
The distribution in refractive indices was measured by using an interference meter on the sample after irradiation, and, from the difference in refractive index for the irradiated part and the non-irradiated part, the change in refractive index generated by the irradiation was obtained as δn/n. Furthermore, the birefringence for the periphery of the irradiated part was obtained by using the birefringence measurement system. The measured results are shown in Table 3.

**Table 3**

| Results of laser irradiation test at low energy density (0.1 mJ/cm²p) for Example 1 | | |
|---|---|---|
| Evaluated item | Result | Note |
| Change in refractive index | 0.05 × 10⁻⁶ increase in refractive index | Laser compaction |
| Change in birefringence | 0.3 nm/cm | Maximum value of induced birefringence |
| Distribution of birefringence | Maximum value given along the boundary plane | See Fig. 3 |
| Birefringence at central part | 0.2 nm/cm | Birefringence at the center of irradiated part |

As is clearly understood from Table 3, in the laser irradiation test on the synthetic quartz glass body of Example 1 using low energy density, it was confirmed that no laser rarefaction occurred, and that the generation of change in refractive index and birefringence attributed to laser compaction fall in an allowable range.

### Example 2

A soot body prepared in a manner similar to that described in Example 1 was subjected to vitrification by heating at 1500°C for 10 hours in a mixed gas atmosphere containing 97 % by volume hydrogen and 3 % by volume water vapor. The obtained synthetic quartz glass was found to have an OH group concentration of 100 ppm, chlorine concentration of 10 ppm, and hydrogen molecule concentration of 1 × 10¹⁸ molecules/cm³.

The synthetic quartz glass body thus obtained was subjected to homogenization treatment, shaping treatment, outer periphery grinding, and gradual cooling in the manner similar to those described in Example 1, to obtain a synthetic quartz disk 260 mm in diameter and 80 mm in thickness. From the synthetic quartz disk, four samples A', B', C', and D', were cut in the same shapes as those of samples A to D used in Example 1, and were subjected to the evaluation of physical properties. The evaluated items and the method of evaluation were the same as those used in Example 1. The physical properties except for the laser evaluation test results are given in Table 4, and the results of laser evaluation using samples C' and D' are given in Table 5 and Table 6.

**Table 4**

| Physical properties of synthetic quartz glass obtained in Example 2 | | | |
|---|---|---|---|
| Evaluated item | Sample | Evaluation method | Evaluation results |
| Internal transmittance for 193.4 nm | A' | Ultraviolet spectroscopy | 99.70 % |
| Hydrogen molecule concentration | B' | Laser Raman Spectroscopy | 1.5 **×** 10¹⁷ molecules/cm³ |
| SiH group concentration | B' | Laser Raman Spectroscopy | 1 × 10⁻⁴ or less(*1) |
| Fictive temperature | B' | Laser Raman Spectroscopy | 930°C |
| Striae | C' | MIL-G-174B | Class A |
| Birefringence | Whole shaped body(*2) | Measurement using Birefringence measurement system | Max 0.3 nm/cm |
| Δn in the direction of use | Whole body (*3) | Measurement using interference meter | Δn: 1 x 10⁻⁶ |

| | | | |
|---|---|---|---|
| In Table 4, notes given by (*) signify the follows: (*1) Concentration of SiH groups given by the ratio of the scattering intensity obtained at wavenumber 2250 cm⁻¹ to that at 800 cm⁻¹. | | | |
| (*2) and (*3) Measurement area corresponds to 90% of the used plane except the outermost periphery (guaranteed plane) | | | |

As is shown in Table 4, the synthetic quartz glass body prepared in Example 2 contains all of the essential constituent components of the synthetic quartz glass material according to the present invention.

**Table 5**

| Results of laser irradiation test at high energy density (20 mJ/cm²p) for Example 2 | | |
|---|---|---|
| Evaluated item | Result | Note |
| Change in transmittance | 0.1 % | (*1) |
| Change in refractive index | 0.15 × 10⁻⁶ increase in refractive index | Laser compaction |
| Change in birefringence Change in birefringence | 0.4 nm/cm | Maximum value of induced birefringence |
| Distribution of birefringence | Maximum value given along the boundary plane | See Fig. 3 |
| Birefringence at central part | 0.2 nm/cm | Birefringence at the center of irradiated part |

| | | |
|---|---|---|
| In Table 5, note shown by (*) represent the follows: (*1) Change in transmittance: represents the difference in transmittance for light193.4 nm in wavelength per 10 mm of sample before and after irradiation. | | |

From Table 5, in the high energy density laser irradiation test on the synthetic quartz glass body of Example 2, it can be clearly understood that no laser rarefaction occurred, that the generation of change in refractive index and birefringence attributed to laser compaction fall in an allowable range, and that the drop in transmittance due to E* centers are all in the allowable range.

**Table 6**

| Results of laser irradiation test at low energy density (0.1 mJ/cm²p) for Example 2 | | |
|---|---|---|
| Evaluated item | Result | Note |
| Change in refractive index | 0.05 × 10⁻⁶ increase in refractive index | Laser compaction |
| Change in birefringence | 0.2 nm/cm | Maximum value of induced birefringence |
| Distribution of birefringence | Maximum value given along the boundary plane | See Fig. 3 See Fig. 3 |
| Birefringence at central part | 0.1 nm/cm | Birefringence at the center of irradiated part |

As is clearly understood from Table 6, in the laser irradiation test on the synthetic quarts glass body of Example 2 using low energy density for Example 2, it was confirmed that no laser rarefaction occurred, and that the generation of change in refractive index and birefringence attributed to laser compaction fall in an allowable range.

### Comparative Example 1

A transparent synthetic quartz glass ingot was produced by preparing fine silica particles obtained by flame hydrolysis of silicon tetrachloride in an oxyhydrogen flame under excessive hydrogen atmosphere containing oxygen and hydrogen at a ratio by volume of 1:2.5, and then melting and depositing the fine silica particles on a rotating base body (direct method synthetic quartz glass). The obtained synthetic quartz glass was found to have an OH group concentration of 800 ppm, chlorine concentration of 70 ppm, and hydrogen molecule concentration of 4 × 10¹⁸ molecules/cm³.

The thus obtained synthetic quartz glass body was subjected to homogenization treatment, shaping treatment, outer periphery grinding, and gradual cooling in the same manner as those described in Example 1, to obtain a synthetic quartz disk 260 mm in diameter and 80 mm in thickness. From the synthetic quartz disk, four samples E, F, G, and H, were cut in the same manner as in Example 1, and were subjected to the evaluation of physical properties. The evaluated items and the method of evaluation were the same as those used in Example 1. The physical properties except for the laser evaluation test results are given in Table 7, and the results of laser evaluation using samples G and H are given in Table 8 and Table 9.

**Table 7**

| Physical properties of synthetic quartz glass obtained in Comparative Example 1 | | | |
|---|---|---|---|
| Evaluated item | Sample | Evaluation method | Evaluation results |
| Internal transmittance for 193.4 nm | E | Ultraviolet spectroscopy | 99.75 % |
| Hydrogen molecule concentration | F | Laser Raman Spectroscopy | 5 × 10¹⁷ molecules/cm³ |
| SiH group concentration | F | Laser Raman Spectroscopy | 1 × 10⁻⁴ or less(*1) |
| Fictive temperature | F | Laser Raman Spectroscopy | 910°C |
| Striae | G | MIL-G-174B | Class A |
| Birefringence | Whole shaped body (*2) | Measurement using Birefringence measurement system | Max 0.4 nm/cm |
| Δn in the direction of use | Whole shaped body (*3) | Measurement using interference meter | Δn: 1 × 10⁻⁶ |

| | | | |
|---|---|---|---|
| In Table 7, notes given by (*) signify the follows: (*1) Concentration of SiH groups given by the ratio of the scattering intensity obtained at wavenumber 2250 cm⁻¹ to that at 800 cm⁻¹. | | | |
| (*2) and (*3) Measurement area corresponds to 90% of the used plane except the outermost periphery (guaranteed plane) | | | |

As is shown in Table 7, the synthetic quartz glass body prepared in Comparative Example 1 contains all of the essential constituent components of the synthetic quartz glass material according to the present invention, except for the hydrogen molecule concentration falling out of the specified range. Thus, the synthetic quartz glass body of Comparative Example 1 is not included in the synthetic quartz glass material of the present invention.

**Table 8**

| Results of laser irradiation test at high energy density (20 mJ/cm²p) for Comparative Example 1 | | |
|---|---|---|
| Evaluated item | Result | Note |
| Change in transmittance | 0 % | (*1) |
| Change in refractive index | 0.05 × 10⁻⁶ increase in refractive index | Laser compaction |
| Change in birefringence | 0.1 nm/cm | Maximum value of induced birefringence |
| Distribution of birefringence | Maximum value given along the boundary plane | See Fig. 3 |
| Birefringence at central part | 0 nm/cm | Birefringence at the center of irradiated part |

| | | |
|---|---|---|
| In Table 8, note shown by (*) represent the follows: (*1) Change in transmittance: represents the difference in transmittance for light of 193.4 nm in wavelength per 10 mm of sample before and after irradiation. | | |

From Table 8, it can be clearly understood that extremely favorable evaluation results are obtained concerning laser resistance to high energy density radiation for the synthetic quartz glass material of Comparative Example 1, and that no problem is found in case high energy density laser radiation is irradiated to the material.

**Table 9**

| Results of laser irradiation test at low energy density (0.1 mJ/cm²p) for Comparative Example 1 | | |
|---|---|---|
| Evaluated item | Result | Note |
| Change in refractive index | 0.8 × 10⁻⁶ drop in refractive index | Laser rarefaction |
| Change in birefringence | 3.5 nm/cm | Maximum value of induced birefringence |
| Distribution of birefringence birefringence | Distribution pattern giving maximum value at the central part | See Fig. 5 |
| Birefringence at central part | 2.5 nm/cm | Birefringence at the center of irradiated part |

As is clearly understood from Table 9, in the laser irradiation test using low energy density for the synthetic quartz glass material of Comparative Example 1, rarefaction occurred on the material, and a large birefringence was thereby generated at the central part of irradiation. Accordingly, it was found unusable as an optical member for an ArF aligner.

### Comparative Example 2

The soot body produced in the same manner as in Example 1 was heated in 100 % He gas atmosphere at 1500°C for 10 hours to obtain a transparent glass body. The synthetic quartz glass thus obtained was found to have an OH group concentration of 80 ppm or less, chlorine concentration of 7 ppm or less, and hydrogen molecule concentration of 5 × 10¹⁵ molecules/cm³ (lower detection limit) or less.

The synthetic quartz glass body thus obtained was subjected to homogenization treatment, shaping treatment, outer periphery grinding, and gradual cooling in the same manner as those described in Example 1, to obtain a synthetic quartz disk 260 mm in diameter and 80 mm in thickness. From the synthetic quartz disk, four samples E', F', G', and H' were cut in the same manner as in the Example 1, and were subjected to the evaluation of physical properties. The evaluated items and the method of evaluation were the same as those used in Example 1. The physical properties except for the laser evaluation test are given in Table 10, and the results of laser evaluation using samples G' and H' are given in Table 11 and Table 12, respectively.

**Table 10**

| Physical properties of synthetic quartz glass obtained in Comparative Example 2 | | | |
|---|---|---|---|
| Evaluated item | Sample | Evaluation method | Evaluation results |
| Internal transmittance for 193.4 nm | E' | Ultraviolet spectroscopy | 99.70 % |
| Hydrogen molecule concentration | F' | Laser Raman Spectroscopy | 5 × 10¹⁵ molecules/cm³ or less |
| SiH group concentration | F' | Laser Raman Spectroscopy | 1 × 10⁻⁴ or less(*1) |
| Fictive temperature | F' | Laser Raman Spectroscopy | 932°C |
| Striae | G' | MIL-G-174B | Class A |
| Birefringence | Whole shaped body(*2) | Measurement using Birefringence measurement system | Max 0.3 nm/cm |
| Δn in the direction of use | Whole shaped body (*3) | Measurement using interference meter | Δn: 1 × 10⁻⁶ |

| | | | |
|---|---|---|---|
| In Table 10, notes given by (*) signify the follows: (*1) Concentration of SiH groups given by the ratio of the scattering intensity obtained at wavenumber 2250 cm⁻¹ to that at 800 cm⁻¹. | | | |
| (*2) and (*3) Measurement area corresponds to 90% of the used plane except the outermost periphery (guaranteed plane) | | | |

As is shown in Table 10, the synthetic quartz glass body prepared in Comparative Example 2 contains all of the essential constituent components of the synthetic quartz glass material according to the present invention except for the hydrogen molecule concentration falling out of the specified range (lower concentration). Thus, the synthetic quartz glass body of Comparative Example 2 is not included in the synthetic quartz glass material of the present invention.

**Table 11**

| Results of laser irradiation test at high energy density (20 mJ/cm²p) for Comparative Example 2 | | |
|---|---|---|
| Evaluated item | Result | Note |
| Change in transmittance | 2.8 % | (*1) |
| Change in refractive index | 1.5 × 10⁻⁶ increase in refractive index | Laser compaction |
| Change in birefringence | 1 4 nm/cm | Maximum value of induced birefringence |
| Distribution of birefringence | Maximum value given along the boundary plane | See Fig. 3 |
| Birefringence at central part | 0.6 nm/cm | Birefringence at the center of irradiated part |

| | | |
|---|---|---|
| In Table 11, note shown by (*) represent the follows: (*1) Change in transmittance: represents the difference in transmittance for light of 193.4 nm in wavelength per 10 mm of sample before and after irradiation. | | |

From Table 11, it can be clearly understood that the synthetic quartz glass material of Comparative Example 2 yields too large laser compaction on irradiating laser at high energy density, and that the drop in laser transmittance attributed to the generation of E* centers is too large. Hence, it cannot be put to practical use.

**Table 12**

| Results of laser irradiation test at low energy density (0.1 mJ/cm²p) for Comparative Example 2 | | |
|---|---|---|
| Evaluated item | Result | Note |
| Change in refractive index | 1.3 × 10⁻⁶ increase in refractive index | Laser compaction |
| Change in birefringence | 1.2 nm/cm | Maximum value of induced birefringence |
| Distribution of birefringence | Maximum value given along the boundary plane | See Fig. 3 |
| Birefringence at central part | 0.6 nm/cm | Birefringence at the center of irradiated part |

The synthetic quartz glass material of Comparative Example 2 again yields too large a laser compaction in case laser is irradiated thereto at low energy density. Hence, it cannot be put to practical use.

### Experimental Example 1

In order to determine the allowable limit of OH group concentration, experiments as follows were conducted. Soot bodies prepared in the same manner as in Example 1 were vitrified in He atmosphere each having different water vapor concentration, to thereby obtain synthetic quartz glass bodies differing in OH group concentration as shown in Table 13. In this case, hydrogen concentration was controlled by post treatment of the resulting glass material, because the presence of hydrogen in the vitrifying atmosphere changes the OH concentration.

The synthetic quartz glass bodies (10 × 10 × 50 mm²) thus obtained were thermally treated at 300°C, i.e., at a temperature sufficiently low that no reductive defects should be generated, for 100 hours in an atmosphere containing 6 % hydrogen and 94 % He to homogeneously dope hydrogen molecules.

For the thus obtained synthetic quartz glass sample, in Table 13 are given the OH group concentration, hydrogen molecule concentration, and the change in transmittance per 1 cm of sample for the ultraviolet radiation of 193.4 nm in wavelength, obtained before and after irradiating thereto an ArF excimer laser radiation at an energy density of 20 mJ/cm²p and for 5 × 10⁶ shots.

**Table 13**

| Experimental results for Experiment 1 conducted on the change in transmittance with respect to OH group concentration | | | | | |
|---|---|---|---|---|---|
| Sample | Water vapor concentration in vitrifying atmosphere | OH group concentration | Hydrogen molecule concentration molecule/cm³ | Change in transmittance | Evaluation |
| 1 | 0 % | 80 ppm | 5 × 10¹⁶ | 0.1 % | good |
| 2 | 3 % | 150 ppm | 5 × 10¹⁶ | 0.2 % | good |
| 3 | 7 % | 250 ppm | 5 × 10¹⁶ | 0.4 % | fair |
| 4 | 15 % | 500 ppm | 5 × 10¹⁶ | 0.8 % | unacceptable |

As is shown in Table 13, it can be understood that samples having OH group concentration in a range of 80 ppm - 250 ppm yield small change in transmittance and are favorable for use or acceptable. Further, it was confirmed that materials having OH group concentration in a range of 5 ppm or higher but not higher than 300 ppm are acceptable for use.

As described above, the present invention provides synthetic quartz glass materials for use in constructing optics for transmitting ArF excimer laser radiations having an energy density per pulse in a range of from 0.01 to 0.5 mJ/cm², particularly suitable for use in constructing lenses, prisms, windows, and the like for semiconductor wafer aligners, which yields small change in birefringence in case laser is irradiated thereto.

Fig. 1 is a diagram showing the direction of usage, application plane, and a certified plane of a disk-shaped quartz glass material, where (a) is an explanatory diagram showing oblique view, and (b) is a planar explanatory diagram.

Fig. 2 is an explanatory diagram showing schematically an embodiment of birefringence in a quartz glass subjected to laser compaction.

Fig. 3 is an explanatory diagram showing schematically an embodiment of the distribution in birefringence of a quartz glass subjected to laser compaction.

Fig. 4 is an explanatory diagram showing schematically an embodiment of birefringence of a quartz glass subjected to laser refraction.

Fig. 5 is an explanatory diagram showing schematically an embodiment of the distribution in birefringence of a quartz glass subjected to laser refraction.

### Explanation of the Symbols

10:Disk-shaped quartz glass material, 12: Direction of usage, 14: Application plane, 14a: Certified plane, 14b: Omitted plane, 20: Quartz glass, 20a: Part irradiated with laser radiation, 20b: Part not irradiated with laser radiation, 22: Boundary, 24: Birefringence, 26: Direction of axis.

## Claims

1. A synthetic quartz glass material for ArF aligners, **characterized by** that it is a synthetic quartz glass material for use in the optics of an ArF aligner transmitting ArF excimer laser radiations having an OH group concentration of 5 ppm or higher but not higher than 300 ppm, and a hydrogen molecule concentration of 1 × 10¹⁶ molecules/cm³ or higher but lower than 2 × 10¹⁷ molecules/cm³, which yields an energy density per pulse in a range of from 0.001 to 0.5 mJ/cm² and having a uniformity in refraction index Δn of 1 × 10⁻⁶ or lower, a birefringence of 1 nm/cm or lower, and an internal transmittance for ultraviolet radiation 193.4 nm in wavelength of 99.7 % or higher.

2. A synthetic quartz glass material for ArF aligners as claimed in Claim 1, wherein, in case ArF excimer laser radiation is shot for 1 × 10⁹ shots at an energy density of 0.1 mJ/cm² per pulse, the change in refractory index occurs as such to increase the refractory index.

3. A synthetic quartz glass material for ArF aligners as claimed in Claim 2, wherein, the change in width of the refractory index as expressed by δn/n is in a range of 0.01 × 10⁻⁶ or higher but not higher than 0.7 × 10⁻⁶.

4. A synthetic quartz glass material for ArF aligners as claimed in one of Claims 1 to 3, wherein, in case ArF excimer laser radiation is shot for 1 × 10⁹ shots at an energy density of 0.1 mJ/cm² per pulse, there generates a distribution in birefringence as such that yields a maximum value along the boundary plane between the radiated part and the non-radiated part with a maximum value of 1.0 nm/cm or lower and a change in birefringence at the center of the irradiated part of 0.5 nm/cm or lower.

5. A synthetic quartz glass material for ArF aligners as claimed in one of Claims 1 to 4, wherein, in case ArF excimer laser radiation is shot for 5 × 10⁶ shots at an energy density of 20 mJ/cm² per pulse, the change in refractory index occurs as such to increase the refractory index and to yield a change in width of the refractory index as expressed by δn/n in a range of 0.01 × 10⁻⁶ or higher but not higher than 0.7 × 10⁻⁶.

6. A synthetic quartz glass material for ArF aligners as claimed in one of Claims 1 to 5, wherein, in case ArF excimer laser radiation is shot for 5 × 10⁶ shots at an energy density of 20 mJ/cm² per pulse, there generates a distribution in birefringence as such that yields a maximum value along the boundary plane between the radiated part and the non-radiated part with a maximum value of 1.0 nm/cm or lower and a change in birefringence at the center of the irradiated part of 0.5 nm/cm or lower.

7. A synthetic quartz glass material for ArF aligners as claimed in one of Claims 1 to 6, wherein, in case ArF excimer laser radiation is shot for 5 × 10⁶ shots at an energy density of 20 mJ/cm² per pulse, the drop in transmittance for an ultraviolet radiation 193.4 nm in wavelength is within 0.4 %.
